# EUROPEAN PATENT SPECIFICATION

(11) **EP 0 770 521 B1**
(45) Date of publication and mention of the grant of the patent: **17.07.2002**
(21) Application number: 96117097.4
(22) Date of filing: 24.10.1996
(51) Int. Cl.: B60R 16/02

(54) **Rotating connector**
Drehverbinder
Connecteur rotatif

(30) Priority: 27.10.1995 JP 28080895; 27.10.1995 JP 28080995; 31.10.1995 JP 28363695
(43) Date of publication of application: 02.05.1997
(60) Divisional application: 00112785.1
(73) Proprietor: ALPS ELECTRIC CO., LTD., Ota-ku Tokyo 145 (JP)
(72) Inventor: Ida, Yuichi, Toda-gun, Miyagi-ken (JP); Bannai, Hiroyuki, Furukawa-shi, Miyagi-ken (JP); Ito, Takehiko, Furukawa-shi, Miyagi-ken (JP); Matsumoto, Mitsunori, Furukawa-shi, Miyagi-ken (JP); Saito, Keiiji, Monou-gun, Miyagi-ken (JP)
(74) Representative: Klunker . Schmitt-Nilson . Hirsch

(56) References cited:
- EP-A- 0 775 611
- DE-A- 4 111 699
- DE-A- 4 419 075
- DE-C- 4 404 408

## Description

The present invention relates to a rotating connector according to the pre-characterizing part of claim 1.

Each of rotating connectors is constructed by connecting a pair of housings, which are concentrically and relatively rotatably coupled to each other, through a belt-like flexible cable. Further, the rotating connectors are roughly categorized into two types in terms of a method of winding a flexible cable. The rotating connector of one of the two types is constructed by winding the flexible cable like a whirl in an annulus storage portion defined by both of the housings. The rotating connector of the other type is constructed by winding the flexible cable in the reverse direction in the storage portion. The rotating connector of the latter type can decrease the necessary length of the flexible cable and thus has an advantage in reduction in the total cost thereof.

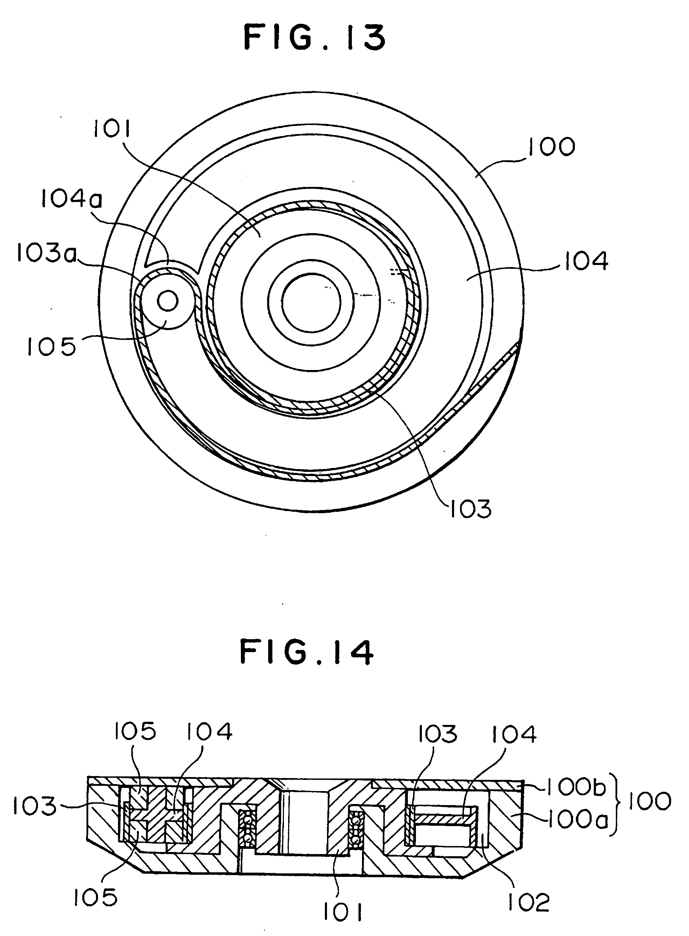

FIG. 13 is a plan view of the heretofore known rotating connector of the latter type, which shows the schematic configuration thereof. FIG. 14 is a sectional view of the rotating connector of FIG. 13, which is disclosed in the United States Patent No. 4,540,223 and so forth. In these figures, reference character 100 designates a first housing which is placed at a stator-side of the connector and consists of a base element or body 100a, whose top surface is opened, and a lid element or body 100b that blocks the open end of the base element 100a. The first housing is fixed at a steering-column side of the automobile. Reference character 101 is a second housing which is located at a rotor-side of the connector and is fixed at a steering-wheel-side thereof. A storage portion 102, whose horizontal section is shaped like a ring, is defined between the first housing 100 and the second housing 101. A belt-like flexible cable 103 and a movable body 104, whose horizontal section is shaped like a letter C, are stored in this storage portion 102. This flexible cable 103 is drawn out of the storage portion 102 during the cable 103 is fixed to both of the first housing 100 and the second housing 101. The direction, in which the flexible cable 103 is wound, is changed in the storage portion 102 through a U-shaped turning portion 103a. Further, in the movable body 104, an opening 104a passing therethrough from the inner peripheral surface to the outer peripheral surface is formed. Moreover, a roller 105 is rotatably mounted on a pin or shaft in the neighborhood of this opening 104a. The turning portion 4a of the flexible cable 103 is looped around the roller 105 through the opening 104a.

When the second housing 101, which operates together with the steering wheel, turns clockwise from a neutral position of FIG. 13 in the rotating connector constructed in this way, the turning portion 103a of the flexible cable 103 moves clockwise in the storage portion 102 by an amount of rotation, which is smaller than that of rotation of the second housing 101. The movable body 104 follows this turning portion 103a and moves clockwise. The flexible cable 103, whose length is about two times the amount of the movement of the movable body 104 and the turning portion 103e, is let out of the inner-tube-side of the second housing 101 and is then rewound to the outer-tube-side of the first housing 100. Conversely, when the second housing 101 rotates counterclockwise from the neutral position of FIG. 13, the turning portion 103a of the flexible cable 103 and the movable body 104 moves in a same direction by an amount of rotation which is less than that of rotation of the second housing 101. The flexible cable 103, whose length is about two times the amount of the movement of the movable body 104 and the turning portion 103e, is let out of the outer-tube-side of the first housing 100 and is then wound around the inner-tube-side of the second housing 101.

The aforementioned rotating connector, however, has problems in that when performing an operation of rotating the second housing 101 relative to the first housing 100, noises are produced by the sliding friction between both of the housings and in that especially in the case where both of the housings 100 and 101 are formed from a same kind of synthetic resin, the sliding noise becomes loud. Moreover, the aforementioned rotating connector has another problem in that both ends in the direction of width (namely, transverse ends) of the flexible cable 103 collide with the bottom surface of the base element 100a and the lid element 100b owing to the vertical movement of the flexible cable 103, which is caused by vibrations received from the automobile, in the storage portion 102 and as a result, offensive sounds are produced.

Further, in the case of the aforementioned conventional rotating connector, when rewinding the flexible cable 103, all of the cable 103 is wound between the outer tube portion of the first housing 100 and the outer peripheral surface of the movable body 104. When winding the cable 103, all of the cable 103 is wound between the inner tube portion of the second housing 101 and the inner periphery of the movable body 104. Thus, there is the necessity of providing a large clearance, which can accommodate all of the flexible cable 103, between the movable body 104 and the inner tube portion and between the body 104 and the outer tube portion. Therefore, for example, in the case that the second housing 101 is in a rotational neutral condition, about one half of the flexible cable 103 is wound between the inner tube portion and the inner peripheral surface of the movable body 104, while almost the other half of the cable 103 is wound between the outer tube portion and the outer peripheral surface of the movable body 104. Thus, the flexible cable 103 is stored in inner and outer peripheral clearances by being loosely wound therearound. Namely, the movable body 104 comes to be able to move in radial directions by the width of the clearance. Consequently, the aforementioned rotating connector has problems in that when transverse vibrations transmitted from the automobile act on the rotating connector, the movable body 104 collides with the walls of the inner and outer tubes and that offensive sounds are produced.

Further, the movable body 104 rotates in the storage portion 102, so that there is the necessity of a clearance between the ceiling or top surface of the storage portion 102 and the top surface of the movable body 104. Namely, the movable body 104 comes to be able to move in the direction of the axis of rotation of the second housing 101 (that is, in the upward or downward direction as viewed in FIG. 14) in the storage portion 102 by the height of the clearance. The aforementioned rotating connector, thus, has problems in that when longitudinal vibrations (namely, vibrations caused in the direction of the axis) from the automobile act thereon, the movable body 104 moves in the direction of the axis in the storage portion 102 and resultantly collides with the top surface and the bottom or floor surface of the storage portion and that thus offensive sounds are produced.

In accordance with the pre-characterizing part of claim 1, DE-A-41 11 699 discloses a rotating connector in which the movable body that is rotatably placed in the storage portion subdivides the storage portion into an inner chamber and an outer chamber. The outer portion of the flexible cable is received in the outer chamber, while the cable may rest on the outward extension portion formed by a flange. A small gap is formed between the flange and an inner wall of the housing.

DE-C1-44 04 408 discloses a rotating connector having an annulus storage chamber receiving a flexible cable. So as to reduce noise, radial ridges are formed on the top and bottom housing portion for supporting the transverse ends of the flexible cable.

It is, accordingly, an object of the present invention to provide a rotating connector which can reduce noises with a simple configuration.

The foregoing object of the present invention is achieved by a rotating connector having the features of claim 1.

Preferred embodiment are defined by the dependent claims.

The direction of the transverse movement of the flexible cable is changed by the curved surface or portion. As a result, the end portions of the flexible cable do not collide with the top surface and the bottom surface of the storage portion with strength. Thus, the offensive noises, which respectively leak out of both of the housings, can be reduced.

### BRIEF DESCRIPTION OF THE DRAWINGS

Other features, objects and advantages of the present invention will become apparent from the following description of preferred embodiments with reference to the drawings in which like reference characters designate like or corresponding parts throughout several views, and in which:
FIG. 1 is a sectional view of a rotating connector embodying the present invention, namely, a first embodiment of the present invention; FIG. 2 is an exploded perspective view of the rotating connector of FIG. 1;
FIG. 3 is a sectional view of a half part of another rotating connector of the present invention, namely, a second embodiment of the present invention;
FIG. 4 is a sectional view of a half part of a further rotating connector of the present invention, namely, a third embodiment of the present invention;
FIG. 5 is a sectional view of a half part of another rotating connector; FIG. 6 is a sectional view of a half part of yet another rotating connector of the present invention, namely, a fourth embodiment of the present invention;
FIG. 7 is a sectional view of a half part of still another rotating connector of the present invention, namely, a fifth embodiment of the present invention;
FIG. 8 is a sectional view of a half part of yet another rotating connector of the present invention, namely, a sixth embodiment of the present invention;
FIG. 9 is a sectional view of a half part of another rotating connector,
FIG. 10 is an exploded perspective view of the rotating connector of FIG. 9;
FIG. 11 is a sectional view of a half part of still another rotating connector of the present invention, namely, a seventh embodiment of the present invention;
FIG. 12 is a sectional view of a half part of yet another rotating connector of the present invention, namely, a eighth embodiment of the present invention;
FIG. 13 is a plan view of a conventional rotating connector, which schematically illustrates the configuration thereof; and
FIG. 14 is a sectional view of the conventional rotating connector of FIG. 13.

### DETAILED DESCRIPTION OF THE PREFERRED EMBODIMENTS

Hereinafter, the preferred embodiments of the present invention will be described in detail by referring to the accompanying drawings.

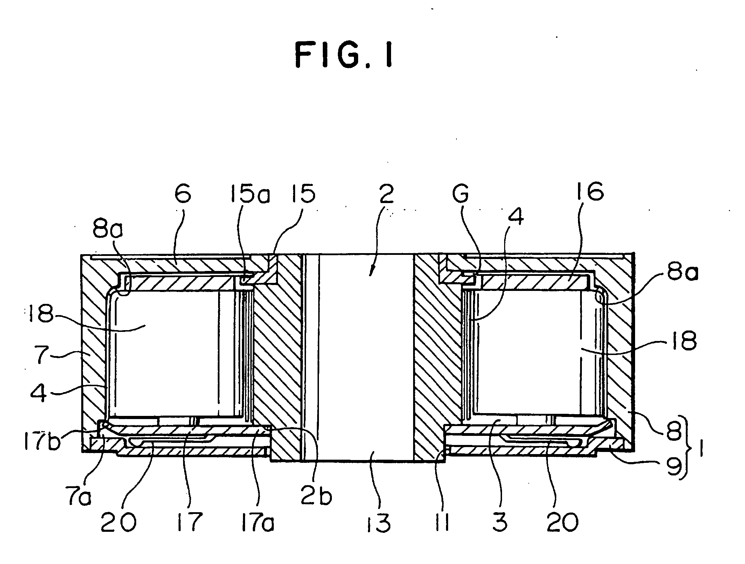

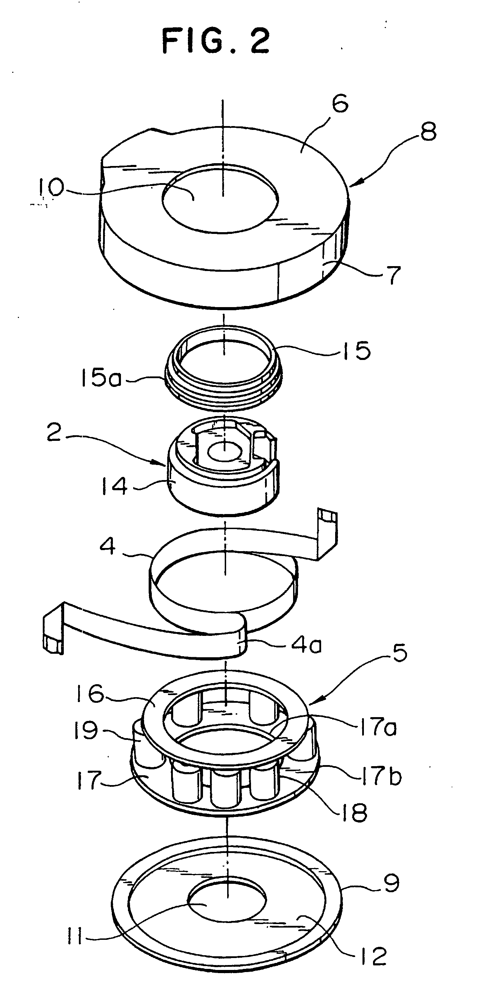

FIG. 1 is a sectional view of a rotating connector embodying the present invention, namely, a first embodiment of the present invention. Further, FIG. 2 is an exploded perspective view of this rotating connector. As shown in these figures, the rotating connector is roughly composed of a first housing 1, a second housing 2 rotatably attached to the first housing 1, a flexible cable wound in an annulus storage portion 3 defined by both of the housings 1 and 2, and a movable body 5 rotatably placed in the storage portion 3.

The first housing 1 consists of: an upper case 8 having an outer tube portion 7 hanging down vertically from an outer peripheral edge of the top board 6; and a lower cover 9 that is joined to and becomes integral with the bottom end of the outer tube portion 7. A curved portion 8a, which is shaped like a letter "r", is formed in a portion at which the top board 6 and the outer tube portion 7 in an inner wall of this upper case 8 are linked together. Center holes are bored in the central portions of the top board 6 of the upper cover 8 and of the lower cover 9, respectively. Further, a ring-like guide groove 12 is provided in the bottom surface portion of the lower cover 9. On the other hand, the second housing 2 is constituted by a tubulous body having a shaft insertion hole 13 in the central portion thereof. The outer peripheral surface portion is an inner tube portion 14. A ring-like sliding cap 15 is interposed between the top outer peripheral edge of this second housing 2 and the center hole 10 of the upper case 8. Both of the housings 1 and 2 are rotatably coupled to each other by using the sliding cap 15 as a rotational sliding portion. This sliding cap 15 is formed or molded from synthetic resin, the kind of which is different from that of the synthetic resin used as the material of both of the housings 1 and 2. A thin flange portion 15a is formed on the bottom outer peripheral surface of the sliding cap 15. Further, the storage portion 3 is defined among the top board 6, the outer tube portion 7 and the lower cover 9, which are placed on the first-housing side, and the inner tube portion 14 placed on the second-housing side. A predetermined gap G is formed between the flange portion 15a of the cap 15 and the top board 6 in this storage portion 3.

The flexible cable 4 is constituted by a belt-like flat cable which is obtained by laminating parallel conductors with a pair of insulating films. Both ends of this flexible cable are drawn out of the first housing 1 and the second housing 2, respectively, after fixed to the outer tube portion 7 and the inner tube portion 14, respectively. Further, in the storage portion 3, the flexible cable 4 is wound clockwise along the inner wall of the outer tube portion 7. Thence, the flexible cable 4 is reversed at a portion (hereunder referred to as a turning portion 4a) thereof, which is curved like a letter "U". Moreover, the flexible cable 4 is wound counterclockwise around the outer wall of the inner tube portion 14.

The movable body 5 consists of: ring-like upper and lower holders 16 and 17 facing to each other by keeping a predetermined distance therebetween; a plurality of rollers 18 respectively mounted on pins or shafts between the holders 16 and 17; and stationary tubes 19 fixed between the holders 16 and 17. A plurality of elastic arms 20 are integrally formed or molded on the bottom surface of the lower holder 17. This lower holder 17 is formed in such a manner as to be wider than the upper holder 16 in the radial direction thereof. An inward extension portion 17a and an outward extension 17b, which are respectively formed on both of peripheral edges of the lower holder 17, are projected further outwardly from the rollers 18 and the stationary tubes 19. Further, the outward extension portion 17b is adapted to be put into a recess portion 7a provided in a lower inner surface part of the outer tube portion 7a, and to accept the outer winding portion of the flexible cable 4 firmly. Moreover, the movable body 5 configured in this way is rotatably placed in the storage portion 3 in a state in which the inward extension portion 17a of the lower holder 17 is axially mounted on shafts around the lower part of the inner tube portion 14. Each of the elastic arms 20 is put on the guide groove 12 in the lower cover 9. At that time, the aforementioned turning portion 4a of the flexible cable 4 is looped around the roller 18 through an opening between the stationary tube 19 and the roller 18 facing this tube. Furthermore, the inner winding portion of this flexible cable 4 is held between the flange portion 15a of the sliding cap 15 and the inward extension portion 17a of the lower holder 7. The outer winding portion of the flexible cable 4 is held between the curved portion 8a of the upper case 8 and the outward extension portion 17b of the lower holder 17.

Next, an operation of the aforementioned rotating connector in the case of using the first housing 1 and the second housing 2 as the stationary body and the movable body, respectively, will be described hereinbelow as an example. In this case, the first housing 1 is fixed to a steering-column side of the steering system. Further, the second housing 2 is coupled to a steering shaft, a steering wheel and so forth.

When using the rotating connector, if the steering wheel is turned clockwise or counterclockwise, the torque (or the turning force) thereof is transmitted to the second housing 2. Thus, the second housing 2 is rotated clockwise or counterclockwise. For example, when the second housing 2 turns clockwise from a position thereof corresponding to the neutral position of the steering wheel, the turning portion 4a of the flexible cable 4 moves clockwise by an amount of rotation which is smaller than that of rotation of the second housing 2. One of the rollers 18 is then pulled by the turning portion 4a with the result that the movable body 5 follows the turning portion 4a and thus moves clockwise and that the flexible cable 4 of the length, which is about twice the amount of the movement thereof, is drawn out of the outer tube portion 7 and is then wound around the peripheral surface of the inner tube portion 14. In contrast with this, when the second housing 2 rotates counterclockwise from the position thereof corresponding to the neutral condition of the steering wheel, the turning portion 4a of the flexible cable 4 moves counterclockwise by amount of rotation, which is smaller than that of rotation of the second housing 2. Then, this turning portion 4a goes away from the roller 18 and pushes the stationary tube 19. Thus, the movable body 5 follows the turning portion 4a and moves counterclockwise. As a result, the flexible cable 4 of the length, which is about twice the amount of the movement thereof, is drawn out of the inner tube portion 14 and is then rewound around the peripheral surface of the outer tube portion 7.

During such an operation, the sliding cap 15 is closely interposed between the rotational sliding portions of both of the housings 1 and 2, so that the sliding noise to be produced at the time of rotating the second housing 2 can be reduced. Further, when a vertical force (namely, a force exerted in the direction of the axis of a steering shaft) acts on the flexible cable 4 owing to vibrations transmitted from the automobile, the flexible cable 4 is going to move vertically in the storage portion 13. However, the flange portion 15a of the sliding cap 15 and the inward extension portion 17a of the lower holder 17a face the transverse ends of the inner winding portion of the flexible cable 4, respectively. Therefore, if collision sounds are produced when the transverse ends of the flexible cable 4 collide with the flange portion 15a and the inward extension portion 17a, the collision sounds are absorbed by the sliding cap 15 and the lower holder 17. Especially, in the case that a predetermined gap G is formed between the flange portion 15a of the sliding cap 15 and the top board 6, the flange portion 15a warps by utilizing this gap G. Thus, the collision-sound absorbing effect of the sliding cap 15 is profound, so that the collision sounds, which are produced by the flexible cable 4 and would leak out of both of the housings 1 and 2, respectively, can be nearly completely eliminated. Further, the elastic arms 20 are provided on the bottom surface of the lower holder 17. Thus, even when the flexible cable 4 collides with the lower holder 17, the cable 4 is elastically caught by the lower holder 17. Especially, the collision sound produced in such a case becomes faint. Meanwhile, the transverse ends of the outer winding portion of the flexible cable 4 are faced to the curved portion 8a of the upper case 8 and to the outward extension portion 17b of the lower holder 17. The direction, in which the top end of the flexible cable 4 collide with the tube portion, is gradually changed by the curved portion 8a. Further, the outward extension portion 17b prevents the bottom end of the flexible cable 4 from colliding with the lower cover 9. Thus, the collision sound produced from the outer winding portion of the flexible cable 4 can be reduced. Moreover, the collision sounds can be prevented from leaking out of the housings 1 and 2, respectively.

Furthermore, even if a lateral force (namely, a force exerted in a direction orthogonal to the axis of the steering shaft) acts on the rotating connector owing to vibrations transmitted from the automobile, the inward extension portion 17a of the lower holder 17 axially is mounted on a shaft or the inner tube portion 14. Thereby, the clearance between the lower holder 17 and the inner tube portion 14 can be set at a necessary minimum size. Consequently, the movable body 5 can be prevented from colliding with the inner tube portion 14 and the outer tube portion 7 and from producing collision sounds. Besides, when a vertical force (namely, a force exerted in the direction of the axis of the steering shaft) acts on the rotating connector owing to the vibrations transmitted from the automobile, the movable body 5 is going to move vertically. The movable body 5 axially mounted on the inner tube portion 14 is, however, hard to move in the axial direction thereof. Further, there is less probability that the movable body 5 in the storage portion 3 leaps up and down and collides with the top and bottom surfaces of the storage portion 3. The collision sound, which would be produced when the movable body 5 collides with the top and bottom surfaces of the storage portion 3, can be reduced. Moreover, the elastic arm 20 is provided on the bottom surface of the lower holder 17 of the movable body 5. Furthermore, this elastic arm 20 pushes the lower holder 17 against a step-like portion 2b formed on a border between the large-diameter portion and the small-diameter portion of the second housing 2. Thereby, the elastic arm 20 causes the lower holder 17 to push out vertically. Consequently, the movable body 5 comes to be elastically supported in the vertical direction thereof. The collision sound due to the leap of the movable body 5 can be further reduced. Simultaneously, because the second housing 2 is pushed by the lower holder 17, the axial clearance is decreased and the movable body 5 is prevented from rattling.

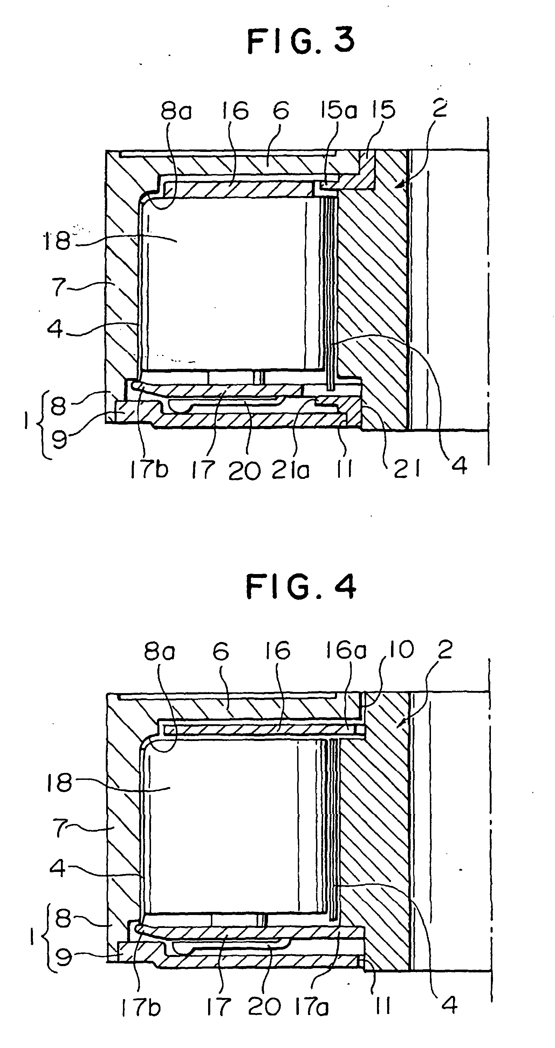

FIG. 3 is a sectional view of a half part of another rotating connector of the present invention, namely, a second embodiment of the present invention. In this figure, same reference characters designate corresponding components of FIG. 1, respectively. This embodiment is different from the aforementioned first embodiment in that the inward extension portion 17a of the lower holder 17 is omitted, that a sliding cap 21 is closely interposed between the bottom outer peripheral edge of the second housing 2 and a center hole 11 bored in the lower cover 9 and that the flange portion 21a of this sliding cap 21 is faced to the bottom transverse end of the flexible cable 4. The rest of the configuration of the second embodiment is basically the same as the corresponding part of the configuration of the first embodiment.

Thus, the second housing 2 can be smoothly rotated and moreover, the sliding noise produced at the time of rotating the second housing 2 can be further reduced by rotatably coupling both of the housings 1 and 2 to each other through the upper and lower sliding caps 15 and 21. Furthermore, because the flange portions 15a and 21a of the sliding caps 15 and 21 are faced to both of the transverse ends of the inner winding portion of the flexible cable 4, the flexible cable 4 can be elastically held by these flange portions 15a and 21a. The collision sound, which is generated when the flexible cable 4 collides with the flange portions 15a and 21a, can be nearly completely eliminated.

FIG. 4 is a sectional view of a half part of still another rotating connector of the present invention, namely, a third embodiment of the present invention. In this figure, same reference characters designate corresponding components of FIG. 1, respectively. This embodiment is different from the aforementioned first embodiment in that the sliding cap 15 is omitted, that the inward extension portion 16a protruding from the rollers 18 and from the stationary tube 19 is formed in the upper holder 16, and that the transverse ends of the flexible cable 4 are held between the inward extension portion 16a and the outward extension portion 17. The rest of the configuration of the third embodiment is basically the same as the corresponding part of the configuration of the first embodiment. In this case, the inward extension portions 16a and 17a of the holders 16 and 17 face both of the transverse ends of the inner winding portion of the flexible cable 4, so that the flexible cable 4 do not directly collide with the top board 6 and the lower cover 9. Thus, the collision sound can be reduced.

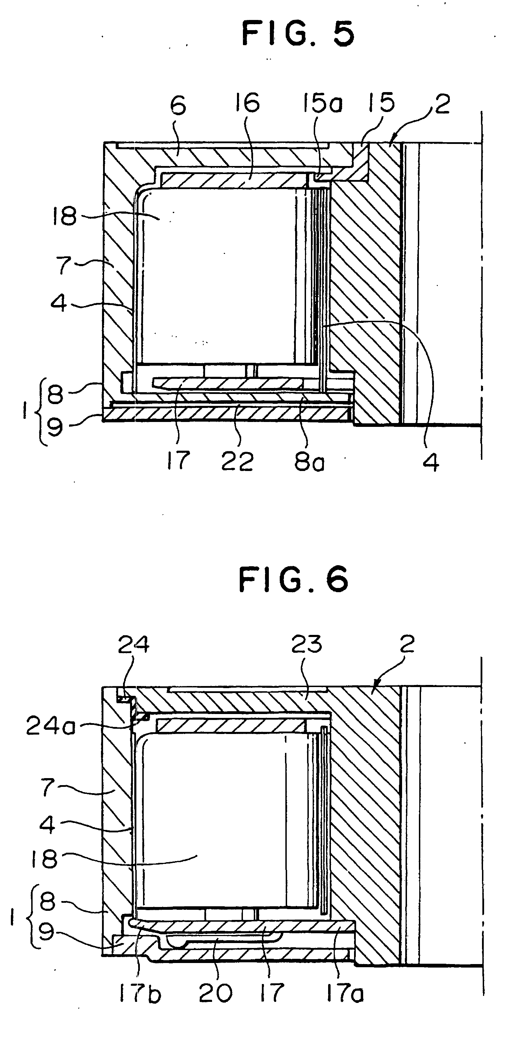

FIG. 5 is a sectional view of a half part of another rotating connector. In this figure, same reference characters designate corresponding components of FIG. 1, respectively. This connector is different from the aforementioned first embodiment in that the inward extension portion 17a and the outward extension portion 17b of the lower holder 17 are omitted, that the wall 8a extending in parallel with the top board 6 is integrally molded with the bottom end of the upper case 8 and that this wall 8a is faced to the bottom transverse end of the flexible cable 4. The rest of the configuration is basically the same as the corresponding part of the configuration of the first embodiment. Although the wall 8a may make contact with the lower cover 9, it is preferable that an air-gap 22 is formed between the wall 8a and the lower cover 9. In this case, the bottom ends of the inner winding portion and the outer winding portion of the flexible cable 4 face the wall 8a of the upper case 8. Thus, the bottom ends of the flexible cable 4 do not directly collide with the lower cover 9. Consequently, the collision sound can be reduced. Especially, when the air-gap 22 is formed between the wall 8a and the lower cover 9, the wall 8a bends by utilizing this air-gap 22. Thereby, the collision-sound absorbing effect can be enhanced.

FIG. 6 is a sectional view of a half part of yet another rotating connector of the present invention, namely, a fourth embodiment of the present invention. In this figure, same reference characters designate corresponding components of FIG. 1, respectively. This embodiment is different from the aforementioned first embodiment in that the top surface portion of the storage portion 3 is constituted by the flange portion 23 integrally molded with the top end portion of the second housing 2 and that the sliding cap 24 having a flange portion 24a is interposed between the outer peripheral edge of this flange portion 23 and the top end of the outer tube portion 7. The rest of the configuration of the fourth embodiment is basically the same as the corresponding part of the configuration of the first embodiment. In this way, the rotational sliding portion of the housings 1 and 2 can be suitably changed. In the case of the fourth embodiment, the flange portion 24a of the sliding cap 24 and the outward extension portion 17b of the lower holder 17 face both of the transverse ends of the outer winding portion of the flexible cable 4. Therefore, even if both of the transverse ends of the flexible cable 4 collide with the flange portion 24a and the outward extension portion 17b and further, collision sounds are produced, the collision sounds are absorbed by the sliding cap 15 and the lower holder 17. Consequently, the collision sound can be reduced.

Incidentally, in the foregoing descriptions of the first to fourth embodiments, there have been described the rotating connectors, in which noise reduction means such as the flange portions 15a, 21a and 24a and the extension portions 16a, 17a and 17b of the holders 16 and 17 are provided at the top and bottom ends of the inner winding portion and the outer winding portion of the flexible cable 4. In the case of the rotating connectors of the present invention, suitable combinations of these noise reduction means may be employed. For instance, an air-gap may be provided in the top board portion 6 of the upper case 8, instead of using the sliding cap 15 and the inward extension portion 16a of the upper holder 16. In such a case, the collision sound, which is produced when the top end of the flexible cable 4 collides with the top board 6, can be reduced. Alternatively, one or a plurality of the noise reduction means may be used. For example, it is possible to used only the sliding cap 15. In this case, the noise reduction effect can be deteriorated somewhat. However, the collision sound, which is produced from the top end of the inner winding portion of the flexible cable 4, can be reduced.

FIG. 6 is a sectional view of a half part of still another rotating connector of the present invention, namely, a fifth embodiment of the present invention. In this figure, same reference characters designate corresponding components of FIG. 1, respectively. This embodiment is different from the aforementioned first embodiment in that a flange portion 2a is formed in the second housing 2 instead of using the sliding cap 15 and that this flange portion 2a is faced to the top end of the inner winding portion of the flexible cable 4. The rest of the configuration of the fifth embodiment is basically the same as the corresponding part of the configuration of the first embodiment. The flange portion 2a is formed on the upper part of the inner tube portion 14 in such a manner as to protrude therefrom. A predetermined gap G is secured between this flange portion 2a and the top board 6. Therefore, both ends of the inner winding portion of the flexible cable 4 are held between the inward extension portion 17a of the lower holder 17 and the flange portion 2a. Consequently, even when vertical vibrations act on the rotating connector, the flexible cable 4 does not directly collide with the top board 6 and the lower cover 9. Thereby, the collision sound can be reduced.

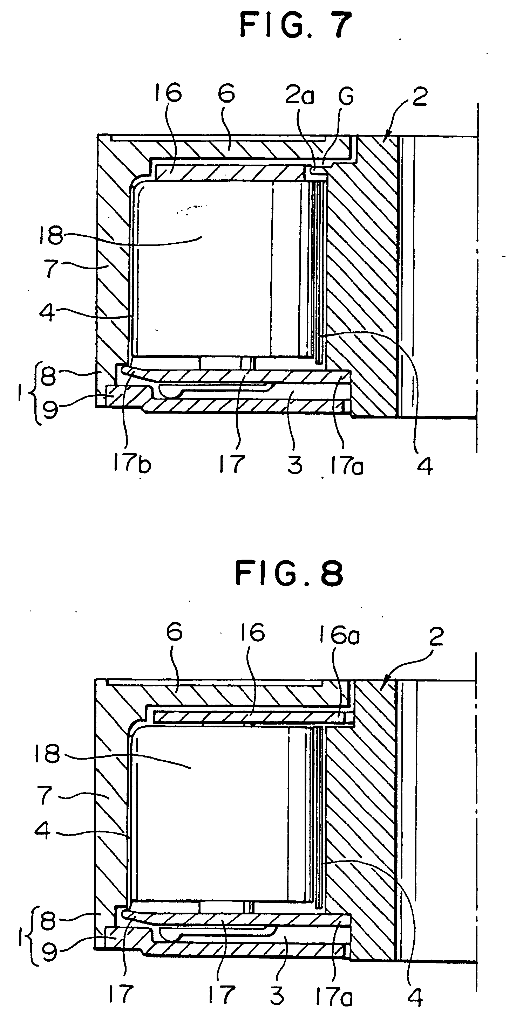

FIG. 8 is a sectional view of a half part of yet another rotating connector of the present invention, namely, a sixth embodiment of the present invention. In this figure, same reference characters designate corresponding components of FIG. 1, respectively. This embodiment is different from the aforementioned first embodiment in that the inward extension portion 16a is formed in the upper holder 16 instead of using the sliding cap 15 and that this inward extension portion 16a is faced to the top end of the inner winding portion of the flexible cable 4. The rest of the configuration of the sixth embodiment is basically the same as the corresponding part of the configuration of the first embodiment. The inward extension portion 16a is integrally formed with the inner peripheral edge portion of the upper holder 16. This inward extension portion 16a projects further inwardly from the rollers 18 and the stationary tube 19 and is loosely fitted into the upper part of the inner tube portion 14. In this way, the inward extension portions 16a and 17a of the lower holders 16 and 17 are faced to both of the transverse ends of the inner winding portion of the flexible cable 4. Thus, even when vertical vibrations act on the rotating connector, the flexible cable 4 does not directly collide with the top board 6 and the lower cover 9. Consequently, the collision sound can be reduced.

Incidentally, in the foregoing descriptions of the fifth and sixth embodiments, there have been described the rotating connectors, in which noise reduction means such as the extension portions 16a, 17a and 17b of the upper and lower holders 16 and 17 and the flange portion 15a of the sliding cap 15 are provided at the top and bottom ends of the inner winding portion and the outer winding portion of the flexible cable 4. In the case of the rotating connectors of the present invention, suitable combinations of these noise reduction means may be employed. For instance, a curved portion, which is similar to the curved portion 8a of the upper case 8, may be formed in the upper part of the inner tube portion 14. this curved portion and the inward extension portion 17a of the lower holder 17 are faced to both ends of the inner winding portion of the flexible cable 4, respectively.

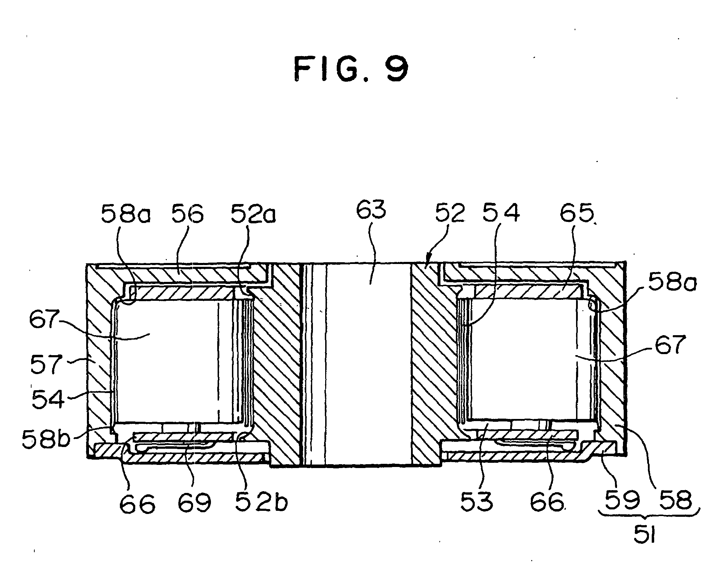

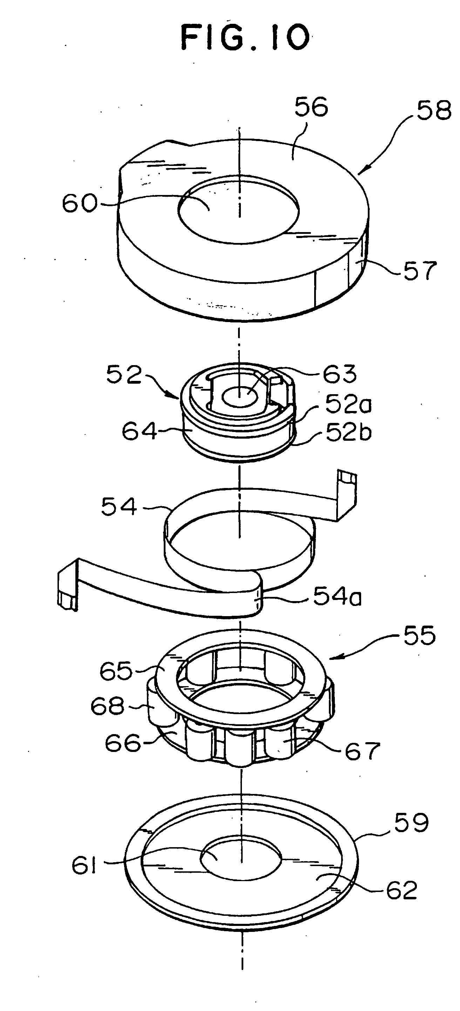

FIG. 9 is a sectional view of a half part of another rotating connector, FIG. 10 is an exploded perspective view of the rotating connector of FIG. 9. As shown in these figures, the rotating connector is roughly composed of a first housing 51, a second housing 52 rotatably attached to the first housing 51, a flexible cable wound in an annulus storage portion 53 defined by both of the housings 51 and 52, and a movable body 55 rotatably placed in the storage portion 3.

The first housing 51 consists of: an upper case 58 having an outer tube portion 57 hanging down vertically from an outer peripheral edge of the top board 56; and a lower cover 59 that is joined to and becomes integral with the bottom end of the outer tube portion 57. Curved portions 58a and 58b, each of which is shaped like a letter "r", are formed at the top and bottom ends of an inner wall of the outer tube portion 57, respectively. Center holes 60 and 61 are bored in the central portions of the top board 56 of the upper cover 58 and of the lower cover 59, respectively. Further, a ring-like guide groove 62 is provided in the bottom surface portion of the lower cover 59. On the other hand, the second housing 52 is constituted by a tubulous body having a shaft insertion hole 63 in the central portion thereof. The second housing 52 is rotatably coupled to the first housing 51 by guiding the top and bottom ends of the outer peripheral edge thereof to the center holes 60 and 61 of the upper case 58 and the lower cover 59, respectively. The outer peripheral surface portion 52 of this second housing 52 is an inner tube portion 64. Further, r-shaped curved portions 52a and 52b are formed at the top and bottom ends of the inner tube portion 64, respectively. Moreover, the storage portion 53 is defined among the top board 56, the outer tube portion 57 and the lower cover 59, which are placed on the side of the first housing 51, and the inner tube portion 64 placed on the side of the second housing 52.

The flexible cable 54 is constituted by a belt-like flat cable which is obtained by laminating parallel conductors with a pair of insulating films. Both ends of this flexible cable 54 are drawn out of the first housing 51 and the second housing 52, respectively, after fixed to the outer tube portion 57 and the inner tube portion 64, respectively. Further, in the storage portion 53, the flexible cable 54 is wound clockwise along the inner wall of the outer tube portion 57. Thence, the flexible cable 54 is reversed at a portion (hereunder referred to as a turning portion 54a) thereof, which is curved like a letter "U". Moreover, the flexible cable 54 is wound counterclockwise around the outer wall of the inner tube portion 64.

The movable body 55 consists of: ring-like upper and lower holders 65 and 66 facing with each other by keeping a predetermined distance therebetween; a plurality of rollers 68 respectively mounted on pins or shafts between the holders 65 and 66; and a stationary tube 68 fixed between the holders 65 and 66. A plurality of elastic arms 69 are integrally formed or molded on the bottom surface of the lower holder 66. Moreover, the movable body 55 configured in this way is rotatably placed in the storage portion 53. Each of the elastic arms 69 is rotatably guided in the radial direction of the storage portion 53 by sliding on the guide groove 62 of the lower cover 59. At that time, a turning portion 54a of the flexible cable 54 is looped around the roller 67 through an opening between the stationary tube 68 and the roller 67 facing this tube. Furthermore, the inner winding portion of this flexible cable 54 is held between both of the curved portions 52a and 52b of the second housing 52 in the transverse direction thereof. The outer winding portion of the flexible cable 54 is held between both of the curved portions 58a and 58b of the upper case 58 in the transverse direction thereof.

Next, an operation of the aforementioned rotating connector in the case of using the first housing 51 and the second housing 52 as the stationary body and the movable body, respectively, will be described hereinbelow as an example. In this case, the first housing 51 is fixed to a steering-column side of the steering system. Further, the second housing 52 is coupled to a steering shaft, a steering wheel and so forth.

When using the rotating connector, if the steering wheel is turned clockwise or counterclockwise, the torque (or the turning force) thereof is transmitted to the second housing 52. Thus, the second housing 52 is rotated clockwise or counterclockwise. For example, when the second housing 52 turns clockwise from a position thereof corresponding to the neutral position of the steering wheel, the turning portion 54a of the flexible cable 54 moves clockwise by an amount of rotation which is smaller than that of rotation of the second housing 52. One of the rollers 67 is then pulled by the turning portion 54a with the result that the movable body 55 follows the turning portion 54a and thus moves clockwise and that the flexible cable 54 of the length, which is about twice the amount of the movement thereof, is drawn out of the outer tube portion 57 and is then wound around the peripheral surface of the inner tube portion 64. In contrast with this, when the second housing 52 rotates counterclockwise from the position thereof corresponding to the neutral condition of the steering wheel, the turning portion 54a of the flexible cable 54 moves counterclockwise by amount of rotation, which is smaller than that of rotation of the second housing 52. Then, this turning portion 54a goes away from the roller 67 and pushes the stationary tube 68. Thus, the movable body 55 follows the turning portion 54a and moves counterclockwise. As a result, the flexible cable 54 of the length, which is about twice the amount of the movement thereof, is drawn out of the inner tube portion 64 and is then rewound around the peripheral surface of the outer tube portion 57.

Hereat, if a vertical force (namely, a force exerting in the direction of the axis of the steering shaft) acts on the flexible cable 54 owing to the vibrations transmitted from the automobile, the flexible cable 54 is going to vertically move in the storage portion 53. At that time, the curved portions 52a and 52b face the transverse ends of the inner winding portion of the flexible cable 54, respectively. Further, the curved portions 58a and 58b of the upper case 58 face both of the transverse ends of the outer winding portion of the flexible cable 54. Thus, the direction, in which the end portions of the flexible cable 54 move, are gradually changed from the vertical direction to oblique directions by these curved portions 52a, 52b, 58a and 58b. Consequently, there are hardly produced collision sounds, even if the end portions of the flexible cable 54 collide with the top board 56 and the lower cover 59.

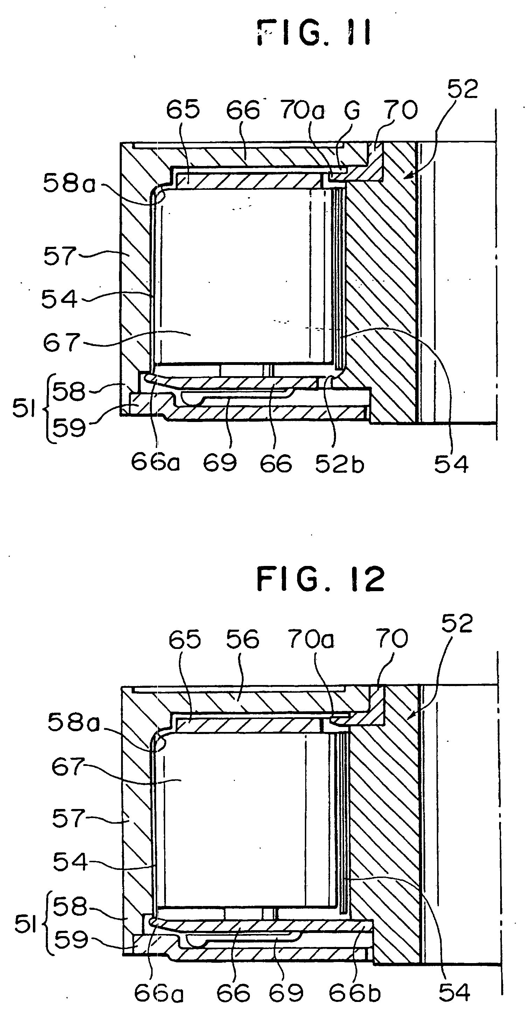

FIG. 11 is a sectional view of a half part of yet another rotating connector of the present invention, namely, a seventh embodiment of the present invention. In this figure, same reference characters designate corresponding components of FIG. 9, respectively. This embodiment is different from the aforementioned connector in that a ring-like sliding cap 70 is used instead of using the upper curved portion 52a of the second housing 52 and that an outward extension portion 66a of the lower holder 66 is used instead of using the lower curved portion 58b of the upper case 58. The rest of the configuration of the seventh embodiment is basically the same as the corresponding part of the configuration of the aforementioned connector. A ring-like sliding cap 70 is closely interposed between the top outer peripheral edge of this second housing 52 and the center hole 60 of the upper case 58. A flange portion 70a formed on this sliding cap 70 faces the top end of the inner winding portion of the flexible cable 54. This sliding cap 70a is formed or molded from synthetic resin, the kind of which is different from that of the synthetic resin used as the material of both of the housings 51 and 52. A predetermined gap G is formed between the flange portion 70a and the top board 56. Further, the outward extension portion 66a is integrally formed with the outer peripheral edge of the lower holder 66. This outward extension portion 66a is protruded further outwardly from the rollers 67 and the stationary tube 68 and faces the bottom end of the outer winding portion of the flexible cable 54.

In the case that the sliding cap 70 is interposed between the rotational sliding portions of the housings 51 and 52 in this way, the sliding noise produced at the time of rotating the second housing 52 can be considerably reduced. Further, because the flange portion 70a of the sliding cap 70 faces the top transverse end of the inner winding portion of the flexible cable 54, the flexible cable 54 can be prevented from colliding directly with the top board 56. Consequently, collision sounds can be reduced. Especially, in the case that the predetermined gap G is provided between the flange portion 70a and the top board 56, the flange portion 70a warps by utilizing this gap G. Thus, the collision-sound reduction effect can be enhanced. Furthermore, in the case that both ends of the flexible cable 54 are elastically held between the flange portion 70a and the lower curved portion 52b and between the upper curved portion 58a and the outward extension portion 66a of the lower holder 66, respectively, the position of the flexible cable 54 is restricted in the vertical direction in the storage portion 53. Therefore, from this point of view, the collision-sound reduction effect can be enhanced.

FIG. 12 is a sectional view of a half part of still another rotating connector of the present invention, namely, a eighth embodiment of the present invention. In this figure, same reference characters designate corresponding components of FIG. 11, respectively. This embodiment is different from the aforementioned seventh embodiment in that an inward extension portion 66b of the lower holder 66 is used instead of using the lower curved portion 52b of the second housing 52. The rest of the configuration of the eighth embodiment is basically the same as the corresponding part of the configuration of the seventh embodiment. The inward extension portion 66b is integrally formed with the inner peripheral edge portion of the lower holder 66 and is projected further inwardly from the rollers 67 and the stationary tube 68 and faces the bottom end of the inner winding portion of the flexible cable 54. In this case, the flange portion 70a of the sliding cap 70 and the inward extension portion 66b of the lower holder 66 face the transverse ends of the inner winding extension portion 66b of the lower holder 66. Thus, the flexible cable 54 does not collide directly with the top board 56 of the upper case 58 and the lower cover 59. Further, the lower holder 66 has an elastic arm 69 attached to the bottom surface thereof and is pushed in the direction of the axis of the second housing. Thus, the flexible cable 54 is elastically caught by the lower holder 66 even if the flexible cable 54 collides therewith. Thereby, the impact of the collision can be lessened. Consequently, the collision sound can be reduced.

Further, in the foregoing descriptions of the seventh and eighth embodiments, there have been described the rotating connectors, in which noise reduction means such as the curved portions 52a, 52b, 58a and 58b, the flange portion 70a of the sliding cap 70 and the extension portions 66a and 66b of the lower holder 66 are provided at the top and bottom ends of the inner winding portion and the outer winding portion of the flexible cable 54. In the case of the rotating connectors of the present invention, suitable combinations of these noise reduction means may be employed. For example, it is possible to use only the curved portions 52a and 52b of the second housing 52. In this case, the noise reduction effect can be deteriorated somewhat. However, the collision sound, which is produced from the inner winding portion of the flexible cable 4, can be reduced.

Incidentally, in the foregoing descriptions of the first to eighth embodiments, there have been described the rotating connectors in which the first housings 1 and 51 are used as stationary bodies and in which the second housings 2 and 52 are used as movable bodies. In contrast, the first housings 1 and 51 may be used as movable bodies. Further, the second housings 2 and 52 may be used as stationary bodies.

Although the preferred embodiments of the present invention have bean described above, it should be understood that the present invention is not limited thereto.

The scope of the present invention, therefore, should be determined solely by the appended claims.

## Claims

1. A rotating connector comprising:
first (1) and second (2) housings that are coupled to each other concentrically and relatively rotatably,
a belt-like flexible cable (4) that is wound both clockwise and counter-clockwise, with a turning portion (4a) there between, in an annulus storage portion (3) defined by both of the housings between the first (1) and second (2) housings and is fixed to both of the housings at both ends thereof, respectively;
and a movable body (5) that is rotatably placed in the storage portion (3) and has an opening through which the turning portion (4a) of the flexible cable (4) passes, wherein extension portions (17a,17b) facing a transverse end of the flexible cable (4) are formed in the movable body (5),
an outward extension portion (17b) projecting outwardly is formed in the movable body (5), wherein a transverse end portion of the flexible cable (4) is faced to the outward extension portion (17b),
**characterized in that**
the outward extension portion (17b) is received in a recess portion (7a) provided in a lower inner surface part of an outer tube portion (7) of one of said first and second housings (1,2).

2. The rotating connector according to claim 1, wherein the movable body (5) has a plurality of rollers (18) and at least one holder (17) for holding the rollers (18), wherein the extension portion (17b) is formed in said holder (17).

3. The rotating connector according to claim 2, wherein two holders (16, 17) are provided such that the rollers (18) are between the holders (16, 17), wherein extension portions (16a, 17a) of both of the holders (16, 17) are faced to both of the transverse ends of the flexible cable (4). respectively.

4. The rotating connector according to claim 1, wherein said annulus storage portion (3) is defined by both of an inner tube portion (14) formed in one of the housings (2) and the outer tube portion (7) formed in the other of the housings (1), and wherein the movable body (5) has an inward extension portion (17a) rotatably radially supported on the inner tube portion (14), wherein a transverse end portion of the flexible cable (4) is faced to the inward extension portion (17a).

5. The rotating connector according to claim 4, wherein a flange portion (2a) protruding into the storage portion (3) is provided in the inner tube portion (14), wherein the flange portion (2a) and the inward extension portion (17a) are faced to both of the transverse end portions of the flexible cable (4), respectively.

6. The rotating connector according to claim 4, wherein the movable body (5) has a plurality of rollers (18) and at least one holder (17) for holding the rollers (18), wherein the inward extension portion (17a) radially supported on the inner tube (14) is formed in the holder (17).

7. The rotating connector according to claim 6, wherein two holders (16, 17) are provided such that the rollers (18) are between the holders (16, 17), wherein the inward extension portions (16a, 17a) of the holders (16, 17) are faced to the transverse end portions of the flexible cable (4), respectively.

8. The rotating connector to claim 6, wherein the holder (17) has an elastic part (20) in a lower portion thereof, wherein the inward extension portion (17a) is brought into an elastic engagement with a step-like part of the inner tube portion (14).

## Patentansprüche

1. Drehverbinder mit:
einem ersten (1) und einem zweiten (2) Gehäuseteil, die konzentrisch und relativ zueinander drehbar miteinander gekoppelt sind,
einem bandartigen flexiblen Kabel (4), das sowohl im Uhrzeigersinn als auch im Gegenuhrzeigersinn mit einem dazwischen vorhandenen Umlenkbereich (4a) in einem ringförmigen Aufnahmebereich (3) aufgewickelt ist, der zwischen dem ersten (1) und dem zweiten (2) Gehäuseteil von beiden Gehäuseteilen gebildet ist, und das an seinen beiden Enden jeweils an einem der beiden Gehäuseteile festgelegt ist; und mit
einem beweglichen Körper (5), der in dem Aufnahmebereich (3) drehbar angeordnet ist und eine Öffnung aufweist, durch die sich der Umlenkbereich (4a) des flexiblen Kabels (4), hindurch erstreckt, wobei einem Querende des flexiblen Kabels (4) zugewandt gegenüberliegende Fortsatzbereiche (17a, 17b) an dem beweglichen Körper (5) ausgebildet sind,
wobei ein nach außen gehender Fortsatzbereich (17b), der nach außen wegsteht, an dem beweglichen Körper (5) ausgebildet ist und ein querverlaufender Endbereich des flexiblen Kabels (4) dem nach außen gehenden Fortsatzbereich (17b) zugewandt gegenüberliegend angeordnet ist,
**dadurch gekennzeichnet, dass** der nach außen gehende Fortsatzbereich (17b) in einem Aussparungsbereich (7a) aufgenommen ist, der in einem unteren Innenflächenteil eines Außenrohrbereichs (7) von einem der ersten und zweiten Gehäuseteile (1, 2) vorgesehen ist.

2. Drehverbinder nach Anspruch 1,
wobei der bewegliche Körper (5) eine Mehrzahl von Rollen (18) sowie wenigstens einen Halter (17) zum Halten der Rollen (18) aufweist,
wobei der Fortsatzbereich (17b) an dem Halter (17) ausgebildet ist.

3. Drehverbinder nach Anspruch 2,
wobei zwei Halter (16, 17) derart vorgesehen sind, dass die Rollen (18) zwischen den Haltern (16, 17) gehalten sind, wobei Fortsatzbereiche (16a, 17a) von beiden der Halter (16, 17) den beiden Querenden des flexiblen Kabels (4) jeweils zugewandt gegenüberliegend angeordnet sind.

4. Drehverbinder nach Anspruch 1,
wobei der ringförmige Aufnahmebereich (3) sowohl durch einen in einem der Gehäuseteile (2) ausgebildeten Innenrohrbereich (14) als auch durch den in dem anderen Gehäuseteil (1) ausgebildeten Außenrohrbereich (7) gebildet ist, und wobei der bewegliche Körper (5) einen nach innen gehenden Fortsatzbereich (17a) aufweist, der an dem Innenrohrbereich (14) drehbar radial abgestützt ist, wobei ein Querendbereich des flexiblen Kabels (4) dem nach innen gehenden Fortsatzbereich (17a) zugewandt gegenüberliegend angeordnet ist.

5. Drehverbinder nach Anspruch 4,
wobei ein in den Aufnahmebereich (3) hinein ragender Flanschbereich (2a) an dem Innenrohrbereich (14) vorgesehen ist, wobei der Flanschbereich (2a) und der nach innen gehende Fortsatzbereich (17a) jeweils, den beiden Querendbereichen des flexiblen Kabels (4) zugewandt gegenüberliegend angeordnet sind.

6. Drehverbinder nach Anspruch 4,
wobei der bewegliche Körper (5) eine Mehrzahl von Rollen (18) und wenigstens einen Halter (17) zum Halten der Rollen (18) aufweist,
wobei der an dem Innenrohrbereich (14) radial abgestützte, nach innen gehende Fortsatzbereich (17a) an dem Halter (17) ausgebildet ist.

7. Drehverbinder nach Anspruch 6,
wobei zwei Halter (16, 17) derart vorgesehen sind, dass die Rollen (18) zwischen den Haltern (16, 17) angeordnet sind, wobei die nach innen gehenden Fortsatzbereiche (16a, 17a) der Halter (16, 17) jeweils den Querendbereichen des flexiblen Kabels (4) zugewandt gegenüberliegend angeordnet sind.

8. Drehverbinder nach Anspruch 6,
wobei der Halter (17) ein elastisches Teil (20) an seinem unteren Bereich aufweist, wobei der nach innen gehende Fortsatzbereich (17a) in elastischen Eingriff mit einem stufenartigen Teil des Innenrohrbereichs (14) gebracht ist.

## Revendications

1. Connecteur rotatif comprenant :
un premier (1) et un deuxième (2) boîtier qui sont accouplés l'un à l'autre de façon concentrique et à rotation mutuelle,
un câble souple du type plat (4) qui a une partie enroulée dans le sens horaire et une partie enroulée dans le sens anti-horaire, avec une partie de renvoi (4a) entre elles, dans une partie de stockage annulaire (3) définie par les deux boîtiers entre les premier (1) et deuxième (2) boîtiers et qui est fixé aux deux boîtiers en ses deux extrémités respectives ;
et un corps mobile (5) qui est placé à rotation dans la partie de stockage (3) et comporte une ouverture par laquelle passe la partie de renvoi (4a) du câble souple (4), où des parties d'extension (17a, 17b) faisant face à une extrémité transversale du câble souple (4) sont formées dans le corps mobile (5),
une partie d'extension extérieure (17b) faisant saillie vers l'extérieur est formée dans le corps mobile (5), une partie d'extrémité transversale du câble souple (4) étant tournée vers la partie d'extension extérieure (17b),
**caractérisé en ce que** la partie d'extension extérieure (17b) est logée dans une partie évidée (7a) réalisée dans une partie de surface intérieure inférieure d'une partie de tube extérieur (7) de l'un desdits premier et deuxième boîtiers (1, 2).

2. Connecteur rotatif selon la revendication 1, dans lequel le corps mobile (5) comporte une pluralité de rouleaux (18) et au moins un support (17) pour tenir les rouleaux (18), la partie d'extension (17b) étant formée dans ledit support (17).

3. Connecteur rotatif selon la revendication 2, dans lequel deux supports (16, 17) sont placés de telle sorte que les rouleaux (18) se trouvent entre les supports (16, 17), des parties d'extension (16a, 17a) des deux supports (16, 17) étant tournées vers les deux extrémités transversales du câble souple (4), respectivement.

4. Connecteur rotatif selon la revendication 1, dans lequel ladite partie de stockage annulaire (3) est définie à la fois par une partie de tube intérieur (14) formée dans l'un des boîtiers (2) et par la partie de tube extérieur (7) formée dans l'autre des boîtiers (1), et dans lequel le corps mobile (5) a une partie d'extension intérieure (17a) supportée radialement à rotation sur la partie de tube intérieur (14), une partie d'extrémité transversale du câble souple (4) étant tournée vers la partie d'extension intérieure (17a).

5. Connecteur rotatif selon la revendication 4, dans lequel une partie formant bride (2a) faisant saillie dans la partie de stockage (3) est prévue dans la partie de tube intérieur (14), la partie formant bride (2a) et la partie d'extension intérieure (17a) étant tournées vers les deux parties d'extrémité transversales du câble souple (4), respectivement.

6. Connecteur rotatif selon la revendication 4, dans lequel le corps mobile (5) comporte une pluralité de rouleaux (18) et au moins un support (17) pour tenir les rouleaux (18), la partie d'extension intérieure (17a) supportée radialement sur le tube intérieur (14) étant formée dans le support (17).

7. Connecteur rotatif selon la revendication 6, dans lequel deux supports (16, 17) sont placés de telle sorte que les rouleaux (18) se trouvent entre les supports (16, 17), les parties d'extension intérieures (16a, 17a) des supports (16, 17) étant tournées vers les parties d'extrémité transversales du câble souple (4), respectivement.

8. Connecteur rotatif selon la revendication 6, dans lequel le support (17) a une partie élastique (20) dans une partie inférieure de celui-ci, la partie d'extension intérieure (17a) étant amenée en coopération élastique avec une partie en épaulement de la partie de tube intérieur (14).
